(19)

**Europäisches Patentamt**
**European Patent Office**
**Office européen des brevets**

(11) **EP 4 589 877 A1**

(12) **EUROPEAN PATENT APPLICATION**

(43) Date of publication:
**23.07.2025 Bulletin 2025/30**

(21) Application number: **25151586.2**

(22) Date of filing: **13.01.2025**

(51) International Patent Classification (IPC):
**H04L 9/00** *(2022.01)*    **H04L 9/08** *(2006.01)*
**H04L 9/30** *(2006.01)*

(52) Cooperative Patent Classification (CPC):
**H04L 9/008; H04L 9/0858; H04L 9/3093;**
H04L 2209/34; H04L 2209/46

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.01.2024 US 202463621188 P**

(71) Applicant: **Su, Zheng-Yao**
**Taipei City (TW)**

(72) Inventor: **Su, Zheng-Yao**
**Taipei City (TW)**

(74) Representative: **Manitz Finsterwald**
**Patent- und Rechtsanwaltspartnerschaft mbB**
**Martin-Greif-Straße 1**
**80336 München (DE)**

(54) **COMPUTER-IMPLEMENTED METHOD BASED ON FRAMEWORK OF EXACT HOMOMORPHIC ENCRYPTION AND SYSTEM ON FRAMEWORK OF EXACT HOMOMORPHIC ENCRYPTION**

(57)    A computer-implemented method based on a framework of Exact Homomorphic Encryption, EHE, protecting information from transmission, to processing and to storage. The EHE framework consists of the message encryption and the computation encryption, safeguarding both data and operations. A crucial step toward the construction of EHE is replacing classical logic gates with quantum gates, which acting on variables to generate multivariate polynomials alongside operating on quantum states conventionally. The generated polynomial sets serve as public keys for encrypting message and computation. Two fundamental traits of quantum gates, invertibility and noncommutativity, establish the success of EHE. As an isomorphism conducting with invertible gates, EHE naturally performs exact encrypted computation in full homomorphism as well as exact decryption. Grounded on a combinatorially high complexity offered by retrieving a circuit of noncommuting gates, EHE not only surpasses the security $2^{128}$ of the post-quantum standard, but also straightforwardly reaches $2^{1024}$ for hyper quantum resilience. Blind computation is attained further, thus sheltering data and operations concurrently. The EHE framework can be regarded as a substantive manifestation of noncommutative cryptography. EHE has been deployable on CPU and GPU, showcasing the capability of exercising encrypted computations of large sizes and high complications over diverse functions.

EP 4 589 877 A1

**Description**

RELATED APPLICATIONS

The present application claims the priority of U.S. Provisional Patent Application No. 63/621,188, filed on January 16, 2024, the disclosure of which is hereby incorporated by reference herein in its entirety.

BACKGROUND OF THE INVENTION

1. FIELD OF THE INVENTION

The present disclosure generally relates to a method for constructing a method based on a framework of exact homomorphic encryption, particularly, to a method based on a framework of exact homomorphic encryption for encryption and computation.

2. DESCRIPTION OF THE RELATED ART

Homomorphic Encryption (HE) permits users to compute on encrypted messages without prior decryption, thus rendering a high level of security for the data processing. Over the next 30 years, improvements in HE remained rather constrained until Gentry's proposal in 2009. His dissertation theoretically allowed arbitrary encrypted computation contingent upon unlimited resources. While, the accumulation of noise poses a hindrance to execute this technique. The predicament is especially pronounced by dint of the exponential growth of noise with the number of multiplications.
Quantum computing has garnered much attention recently inasmuch as its momentous influence not only on data processing, but also on information protection. An intriguing field of study in relation to the security hazard is Quantum Public-Key Encryption (QPKE). The core approach entails the production of one-way functions to generate a quantum state that plays the role of a public key for encrypting message. QPKE is impeded mainly by necessitating sizable quantum operations, which falls into the hurdle of scaling up quantum computers.
Quantum Homomorphic Encryption (QHE) is another research area that has become increasingly appealing to safeguard data manipulation. Typically, an encrypted computation is exercised with a fault-tolerant Clifford+T circuit. Explicitly, physical qubits outnumber logical qubits by at least several hundred times, refuting the accessibility of QHE. An alternative rephrases a present HE to its quantum version. Aside from receiving the demerits of HE schemes aforesaid, the method in view consumes numerous qubits and then encounters the scalability barrier of quantum computers.
A serial of episodes elucidates a structure called the Quotient Algebra Partition, QAP, universally existing in finite-dimensional unitary Lie algebras. Given this structure inherited by every stabilizer code, a general methodology of Fault Tolerance Quantum Computation in QAP, abbreviated as QAPFTQC, elicits an algorithmic procedure achieving the acquirement that every action in every error-correcting code is fault tolerant. A fault tolerance quantum computation is thence derived by applying this encode on the codeword.

SUMMARY OF THE INVENTION

Accordingly, inventors of the present inventive concept introduce a computer-implemented method based on a framework of exact homomorphic encryption and a system for encryption and computation on a framework of exact homomorphic encryption which are stemming from the concept of QAPFTQC. The framework Exact Homomorphic Encryption, EHE, is proposed to admit computations on encrypted data. The message encryption and the computation encryption of EHE are thought of as analogous to the cryptograph of a quantum state and the fault-tolerant counterpart of a computation in QAPFTQC.
The present inventive concept provides a computer-implemented method based on a framework of exact homomorphic encryption (EHE), wherein the method comprises:

S 10. providing a multivariate polynomial *of k* variables $f(x) = \sum_{\tau \in Z_2^k} c_\tau x^\tau$ wherein *f(x)* is a linear combination of monomials $x^\tau$ of degrees $\leq k$ with coefficients $c_\tau \in Z_2$, and each monomial $x^\tau$ is expressed as

$x^\tau = x_1^{\sigma 1} x_2^{\sigma 2} \cdots x_k^{\sigma k}$, where $x_r \in Z_2$, $\tau = \sigma_1 \sigma_2 \cdots \sigma_r \cdots$ $\sigma_k \in Z_2^k$ and $r \in [k]$, with [k] denoting a set of positive integers from 1 to *k;*

S20. introducing elementary gates $\Lambda_r^\theta$ of *k* qubits, where the integer *r* signifies the *r*-th qubit as a target qubit of the elementary gate, and nonzero entities of Zc-bit binary string $\theta = \epsilon_1\epsilon_2 \cdots \epsilon_k \in Z_2^k$ indicate positions of qubits serving as control bits;

S30. applying elementary gates on quantum states;

S40. applying elementary gates on the variables to generate multivariate polynomials over a binary field $Z_2$, formulated as the following transformation rule,

$$\Lambda_r^\theta \Vdash x_s = x_s + \delta_{rs}\boldsymbol{x}^\theta \ldots \text{Eq. 1}$$

wherein $x_s \in Z_2$ is a binary variable and $\boldsymbol{x}^\theta = x_1^{\epsilon_1} x_2^{\epsilon_2} \cdots x_k^{\epsilon_k}$ a monomial *of k* variables;

S50. defining a first encryption mapping $\mathcal{R}_{en}$ which is an ordered product of elementary gates randomly chosen; and

S60. applying the first encryption operator $\mathcal{R}_{en}$ to generate a set of *w* multivariate polynomials that serves as a public encryption key for encoding a *k*-qubit plaintext into a *w*-qubit ciphertext, $w \geq k$, for message encryption.

According to the present inventive concept, the elementary gates comprises the negation, the CNOT, the Toffoli, and the multi-controlled gates.

According to the present inventive concept, wherein the method further comprises:

S70. introducing a desired operation M of *n* qubits, $n > w$, wherein *M* is represented as a circuit composed of *n*-qubit elementary gates;

S80. defining a second encryption mapping $\mathcal{R}_{cv}$, wherein $\mathcal{R}_{cv}$ is an ordered product of *n*-qubit elementary gates randomly chosen;

S90. encoding the desired operation *M* into an encrypted action, wherein the desired operation *M is* cryptified into an encrypted action *U* through the first encryption operator $\mathcal{R}_{en}$ and the second encryption operator $\mathcal{R}_{cv}$;

S100. generating an encrypted polynomial set from the encrypted action *U*; and

S110. evaluating the encrypted polynomial set on the ciphertext to yield an encrypted computation.

According to the present inventive concept, wherein the step S40 further comprises:

S41. giving a second binary string $\zeta$, wherein the second binary string $\zeta$ determines how variables interact within the monomial;

S42. modifying the monomial $x^\theta$ based on the second binary string $\zeta$ into a modified form $\bar{x}_\zeta^\theta$; and

S43. expanding the Eq. 1 to a formation

$$\Lambda_r^{\theta,\zeta} \Vdash x_s = x_s + \delta_{rs}\bar{x}_\zeta^\theta \ldots \text{Eq. 2}$$

where s E [k] and $\bar{x}_\zeta^\theta$ is defined as $\bar{x}_\zeta^\theta = \prod_{i=1}^k (x_i + \varsigma_i)^{\epsilon_i}$.

According to the present inventive concept, wherein the step S50 further comprises:

S51. defining the first encryption operator $\mathcal{R}_{en}$ as a product operation $\mathcal{R}$ which is a *k*-qubit ordered product of elementary gates, as:

$$\mathcal{R} = \prod_{i=1}^n \Lambda_{r_i}^{\theta_i},$$

where $\Lambda_{r_i}^{\theta_i}$ denotes the $i$-th elementary gate acting on the $r_i$-th qubit with a control string $\theta_i \in \mathbb{Z}_2^k$;

S52. defining a reverse product operation $\widehat{\mathcal{R}}$, wherein $\widehat{\mathcal{R}}$ is the order-reversed product of $\mathcal{R}$, which is expressed as:

$$\widehat{\mathcal{R}} = \prod_{i=n}^{1} \Lambda_{r_i}^{\theta_i};$$

and

S53. establishing an equality between the product operation $\mathcal{R}$ and its reverse $\widehat{\mathcal{R}}$ for each basis state $|x\rangle$:

$$\mathcal{R}|x\rangle = \widehat{\mathcal{R}}|x\rangle,$$

where $x \in \mathbb{Z}_2^k$.

According to the present inventive concept, wherein the step S50 further comprises:

S54. preparing an initial set of the multivariable polynomials $\mathcal{P}_{in}$ = {$g_j(x)|j \in [w]$}, wherein $g_j(x)$ corresponds to each of $f$ ($x$), wherein each of $g_j(x)$ is expressed as:

$$g_j(x) = \sum_{\tau \in Z_2^k} c_{\tau,j} x^{\tau},$$

where $c_{\tau,j} \in Z_2$ are binary coefficients;

S55. applying the product operation $\mathcal{R}_{en}$ on each polynomial in the initial polynomial set $\mathcal{P}_{in}$; and

S56. outputting an ordered set of polynomials $\mathcal{P}_{w,k}$ ($\mathcal{R}_{en}$ ;$x$) = {$f_j(x) = \mathcal{R}_{en}$ ⊢ $g_j(x)$:$j \in$ [w]}, serving as a public encryption key, where $w \geq k$ is the number of the polynomials.

According to the present inventive concept, wherein the step S60 further comprises:

S61. providing the plaintext $|m\rangle$, wherein the plaintext is of $k$ qubits; and
S62. encoding the plaintext to the ciphertext $|c\rangle$, wherein the ciphertext is of $w$ qubits, generated by evaluating the public encryption $\mathcal{P}_{w,k}$ ($\mathcal{R}_{en}$ ; $x$) on the plaintext, such that

$$|c\rangle = |f_1(m)f_2(m) \dots f_w(m)\rangle,$$

where $m \in Z_2^k$, $c \in Z_2^w$ and $f_j(m) \in Z_2$ is the evaluation of the $j$-th polynomial $f_j(x) \in \mathcal{P}_{w,k}$ ($\mathcal{R}_{en}$ ;$x$) on the plaintext, $1 \leq j \leq w$.

According to the present inventive concept, wherein the number of different polynomial sets, generated by all permutations of the elementary gates composing the operator $\mathcal{R}$, is a minimum of $h!$, where $h$ is a size of a maximal set of pairwise noncommuting gates in R.

According the present inventive concept, wherein the step S60 further comprises:

S63. decrypting the $w$ -qubit ciphertext $|c\rangle$ to $|m\rangle \otimes |r\rangle = \mathcal{R}_{en}$ $|c\rangle$ by the first encryption mapping $\mathcal{R}_{en}$ to recover the plaintext $m$.

According to the present inventive concept, wherein the method further comprises:

S120. defining an encrypted action $\mathcal{U}_{cv}$ , wherein $\mathcal{U}_{cv} = (\mathcal{R}_{en}^{-1} \otimes I)\widehat{M}\mathcal{R}_{cv}$ , with $\hat{M}$ is an order-reversed product of $M$, $n \geq$ w, and $I$ is an identity operator of $n$ - w qubits; and

S130. given the w-qubit ciphertext $|c\rangle$ of the k-qubit plaintext $|m\rangle$ derived from the second encryption operator $\mathcal{R}_{cv}$ and an $n$-qubit action $M$, $n = w \geq k,$ generating an encrypted polynomial set

$$\mathcal{P}_{n,n}\left(\mathcal{U}_{cv}^{\ddagger}; z\right) = \{\alpha_i(z) = \mathcal{U}_{cv}^{\ddagger} \Vdash z_i : i \in [n]\} \ldots \text{Eq. 3,}$$

wherein

$$\mathcal{U}_{cv}^{\ddagger}$$

is an encrypted action, and expressed as

$$\mathcal{U}_{cv}^{\ddagger} = \mathcal{R}_{cv}^{-1}\widehat{M}\mathcal{R}_{cv},$$

$\alpha_i$(z) is the $i$-th polynomial of

$$\mathcal{P}_{n,n}\left(\mathcal{U}_{cv}^{\ddagger}; z\right), z = z_1 z_2 \ldots z_n \in Z_2^n.$$

.

According to the present inventive concept, wherein the method further comprises:

S140. given the w-qubit ciphertext $|c\rangle$ of the $k$-qubit plaintext $|m\rangle$ derived from the first encryption operator $\mathcal{R}_{en}$ and an $n$-qubit action $M$, $n > w \geq k,$ generating an encrypted polynomial set

$$\mathcal{P}_{n,w}\left(\mathcal{U}_{cv}; z\right) = \{\beta_i(z) = \mathcal{U}_{cv} \Vdash z_i : i \in [n]\} \ldots \text{Eq. 4,}$$

wherein $\beta_i$(z) is the $i$-th polynomial of $\mathcal{P}_{n,w}$ ( $\mathcal{U}_{cv}$ ; z), $z = z_1 z_2 \ldots z_n \in Z_2^n$ .

According to the present inventive concept, wherein the method further comprises:

S150. paralleling a number e of sectional encrypted circuits $\mathcal{U}_{cv,q}$ composing $\mathcal{U}_{cv}$ , $q \in$ [e];
S160. generating a sequential evaluation of encrypted polynomial sets

$$\mathcal{P}_{n,w}\left(\mathcal{U}_{cv,q}; z\right) = \{\beta_{i,q}(z) = \mathcal{U}_{cv,q} \Vdash z_i : i \in [n]\} \ldots \text{Eq. 5.}$$

The present inventive concept further provides a system for encryption and computation on a framework of exact homomorphic encryption, comprising:

a program for executing the computer-implemented method based on a framework of exact homomorphic encryption according to the present inventive concept; and
a computing architecture comprising a processing unit, wherein the program is deployed on the computing architecture.

According to the present inventive concept, wherein the program for executing the computer-implemented method comprising a software for exact homomorphic encryption, wherein the software comprises a first code and a second code.

According to the present inventive concept, wherein the first code is for the message encryption.

According to the present inventive concept, wherein the second code is for executing the computer-implemented method based on a framework of exact homomorphic encryption.

According to the present inventive concept, wherein the computing architecture comprises a CPU, GPU, or a combination thereof.

BRIEF DESCRIPTION OF THE DRAWINGS

FIG. 1 is a schematic flow diagrams according to an embodiment of the present inventive concept;
FIG. 2 is a schematic diagram of the elementary gate used in the algorithm according to the present inventive concept;
FIG. 3 is a schematic flow diagrams according to another embodiment of the present inventive concept;
FIG. 4 is a schematic flow diagrams according to another embodiment of the present inventive concept;
FIG. 5 is a schematic flow diagrams according to another embodiment of the present inventive concept;
FIG. 6 is a schematic flow diagrams according to another embodiment of the present inventive concept;
FIG. 7 is a schematic flow diagrams according to another embodiment of the present inventive concept;
FIG. 8 shows (a) the process of an embodiment of the present inventive concept where the message and computation are mapped to an identical space; and (b) the process of another embodiment of the present inventive concept that the message and computation are mapped to different spaces of encryption;
FIG. 9 is a block diagrams according to an embodiment of the present inventive concept;
FIG. 10 shows test data of the message encryption according to an embodiment of the present inventive concept; and
FIG. 11 shows test data of the cryptovaluations according to another embodiment of the present inventive concept. according to an embodiment of the present inventive concept.

DETAILED DESCRIPTION

The present inventive concept is described by the following specific embodiments. Those with ordinary skills in the arts can readily understand other advantages and functions of the present inventive concept after reading the disclosure of this specification. Any changes or adjustments made to their relative relationships, without modifying the substantial technical contents, are also to be construed as within the range implementable by the present inventive concept.

Moreover, the word "exemplary" or "embodiment" is used herein to mean serving as an example, instance, or illustration. Any aspect or design described herein as exemplary or an embodiment is not necessarily to be construed as preferred or advantageous over other aspects or designs. Rather, use of the word "exemplary" or "embodiment" is intended to present concepts and techniques in a concrete fashion.

As used in this application, the term "or" is intended to mean an inclusive "or" rather than an exclusive "or." That is, unless specified otherwise or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more," unless specified otherwise or clear from context to be directed to a singular form.

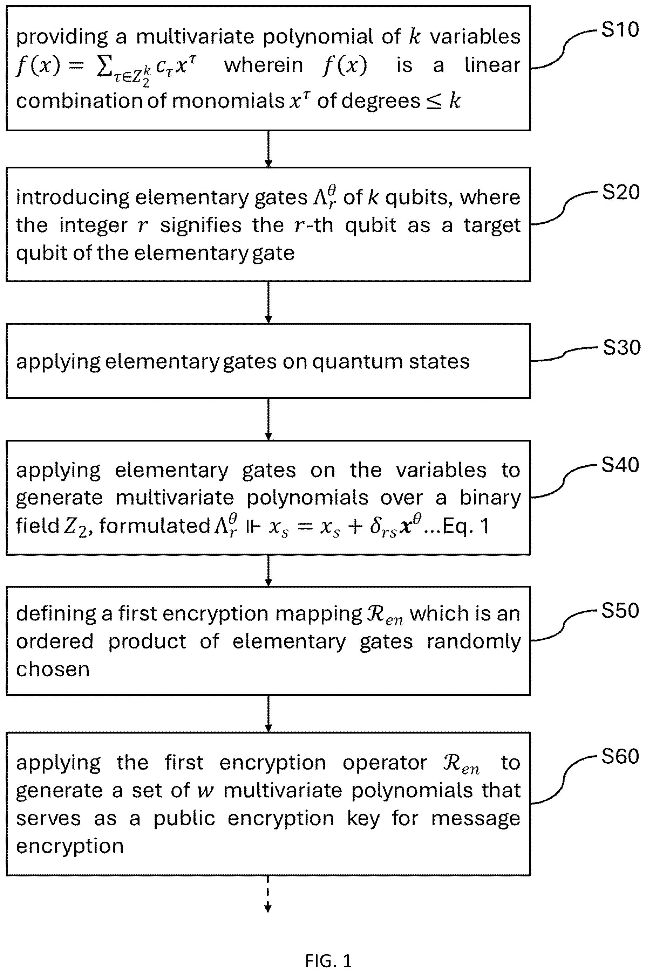

Please refer to FIG. 1 which is a schematic flow diagrams according to an embodiment of the method of the present inventive concept. The present inventive concept provides a computer-implemented method based on a framework of exact homomorphic encryption (EHE), wherein the method may comprise:

S10. providing a multivariate polynomial *of k* variables $f(x) = \sum_{\tau \in Z_2^k} c_\tau x^\tau$.

According to the present inventive concept, $f(x)$ is a linear combination of monomials $x^\tau$ of degrees $\leq k$ with coefficients $c_\tau \in Z_2$. Each monomial $x^\tau$ may be expressed as $x^\tau = x_1^{\sigma 1} x_2^{\sigma 2} \cdots x_k^{\sigma k}$, where $x_r \in Z_2$, $\tau = \sigma_1 \sigma_2 \cdots \sigma_r \cdots \sigma_k \in Z_2^k$ and $r \in [k]$, with $[k]$ denoting a set of positive integers from 1 to *k*.

According to the present inventive concept, the formulation provides the foundational representation of polynomials in the binary field $Z_2$.

The polynomial $f(x)$ may serve as the foundation for encoding and transforming data in the EHE framework.

According to the present inventive concept, the method may further comprise:

S20. introducing elementary gates $\Lambda_r^\theta$ of *k* qubits, where the integer *r* signifies the *r*-th qubit as a target qubit of the elementary gate, and nonzero entities of *k*-bit binary string $\theta = $ $\epsilon_1 \epsilon_2 \cdots \epsilon_k \in Z_2^k$ indicate positions of qubits serving as control bits;

According to the present inventive concept, the elementary gates may act on *k*-qubit quantum states and the gates may be represented by the transformation $\Lambda_r^\theta$, wherein *r* may identify the target qubit and $\theta = \epsilon_1 \epsilon_2 \cdots \epsilon_k \in Z_2^k$ may specify the control bits.

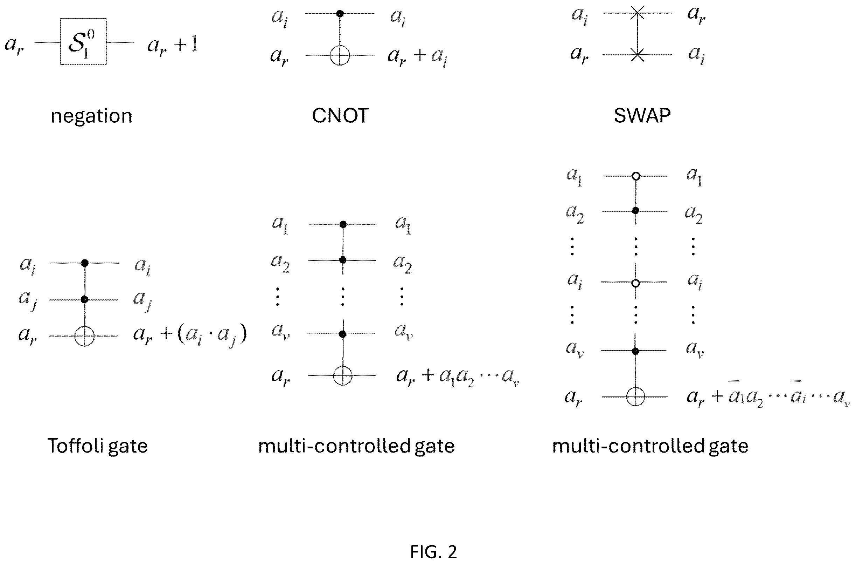

According to the present inventive concept, the elementary gates may comprise the negation, the CNOT, the Toffoli, and the multi-controlled gates as shown in FIG 2.

Every elementary gate is a transformation of dimension-one preserving that maps a basis quantum state into another, referring to FIG. 2 for the diagrammatic exemplification. Since AND and OR can be rephrased in Toffoli gates attended with ancilla qubits, this set vouches for the computational universality. These gates may operate on quantum states to enable transformations within the EHE framework. The method of the present inventive concept leverages fundamental quantum operations to manipulate data securely and make the transformation flexibly by including these gates.

Each of elementary gates used in the present inventive concept is dimension-one preserving. This design avoids the heavy memory demands associated with simulating full quantum states, making it feasible on both CPU and GPU without the need for quantum computers.

According to the present inventive concept, the method may further comprise:

S30. applying elementary gates on quantum states;

S40. applying elementary gates on the variables to generate multivariate polynomials over a binary field $Z_2$, formulated as the following transformation rule,

$$\Lambda_r^\theta \Vdash x_s = x_s + \delta_{rs} x^\theta \dots \text{Eq. 1}$$

wherein $x_s \in Z_2$ is a binary variable and $x^\theta = x_1^{\epsilon_1} x_2^{\epsilon_2} \cdots x_k^{\epsilon_k}$ represents the monomial transformation of *k* variables which induced by the gate.

According to the present inventive concept, these steps may provide a precise mechanism for transforming quantum states into multivariate polynomials over the binary field $Z_2$.

According to the present inventive concept, the method may further comprise:

S50. defining a first encryption mapping $\mathcal{R}_{en}$ which is an ordered product of elementary gates randomly chosen; and

S60. applying the first encryption operator $\mathcal{R}_{en}$ to generate a set of *w* multivariate polynomials that serves as a public encryption key for encoding a k-qubit plaintext into a *w*-qubit ciphertext, $w \geq k$, for message encryption.

The first encryption mapping is constructed to encode plaintext into ciphertext by applying transformations to the input polynomials. According to the precent inventive concept, the output may be a set of *w*-multivariate polynomials, which may form a public encryption key.

The mapping of Eq. 1 de facto unveils the polynomial representation of elementary gates. Applied by this mapping, the variable $x_s$ receives a shift of the product $x^\theta$ if the *s*-th qubit is identical to the target bit, or remains intact otherwise. In practical maneuvers, elementary gates operate on variables of monomials. The gate $\Lambda_r^\theta$ is said to be of *rank t* if $\theta$ contains a number *t* of nonzero bits. That is, a negation is of rank zero, a CNOT rank one, a Toffoli rank two, and a multi-controlled gate is *of rank t* $\geq 3$. Notice that every elementary gate defined here is unitary and involutory.

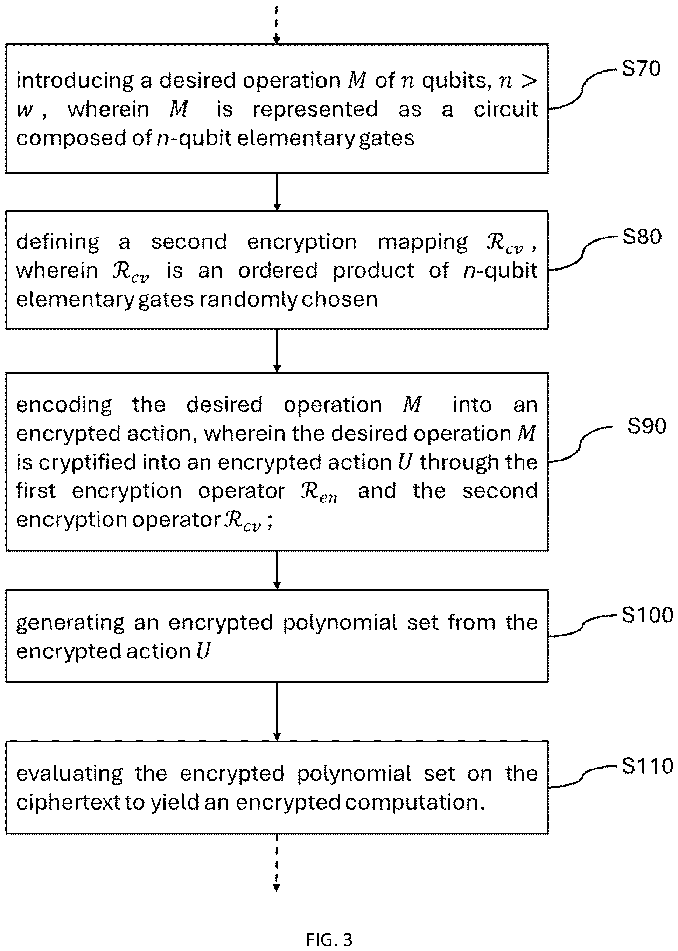

Please refer to FIG. 3 which is a schematic flow diagrams according to another embodiment of the method of the present inventive concept.

According to the present inventive concept, wherein the method may further comprise:

S70. introducing a desired operation *M* of *n* qubits, *n* > *w,* wherein *M* is represented as a circuit composed of *n*-qubit elementary gates.

According to the present inventive concept, the operation may be represented as a circuit composed of *n*-qubit elementary gates and may serve as the computation to be encrypted and performed homomorphically.

According to the present inventive concept, the method may further comprise:

S80. defining a second encryption mapping $\mathcal{R}_{cv}$ , wherein $\mathcal{R}_{cv}$ is an ordered product of $n$-qubit elementary gates randomly chosen.

According to the present inventive concept, the second encryption mapping $\mathcal{R}_{cv}$ may introduce cryptographic complexity.

According to the present inventive concept, the method may further comprise:

S90. encoding the desired operation $M$ into an encrypted action, wherein the desired operation $M$ is cryptified into an encrypted action $U$ through the first encryption operator $\mathcal{R}_{en}$ and the second encryption operator $\mathcal{R}_{cv}$ .

According to the present inventive concept, the process ensures that the operation $M$ is transformed into a secure, encrypted form compatible with ciphertext computations.

According to the present inventive concept, the method may further comprise:

S100. generating an encrypted polynomial set from the encrypted action $U$; and
S110. evaluating the encrypted polynomial set on the ciphertext to yield an encrypted computation.

According to the present inventive concept, the encrypted action $U$ may enable computations to be performed in the encrypted domain. The polynomial sets may serve as intermediaries to evaluate encrypted operations.

The computation can be performed homomorphically without decrypting the ciphertext by the present inventive concept. The evaluation process, referred to as cryptovaluation, may establish the duality between polynomial evaluation and state computation, validating the integrity of the encrypted computation.

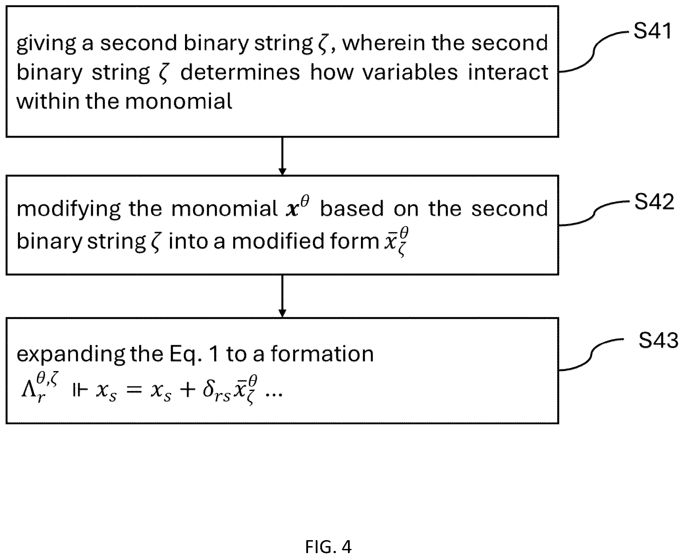

Please refer to FIG. 4 which is a schematic flow diagrams according to an embodiment of the method of the present inventive concept.

According to the present inventive concept, wherein the step S40 may further comprise:

S41. giving a second binary string $\zeta$, wherein the second binary string $\zeta$ determines how variables interact within the monomial;

S42. modifying the monomial $x^\theta$ based on the second binary string $\zeta$ into a modified form $\bar{x}_\zeta^\theta$ ; and
S43. expanding the Eq. 1 to a formation

$$\Lambda_r^{\theta,\zeta} \Vdash x_s = x_s + \delta_{rs}\bar{x}_\zeta^\theta \;...\text{Eq. 2}$$

where s E [k] and $\bar{x}_\zeta^\theta$ is defined as $\bar{x}_\zeta^\theta = \prod_{i=1}^{k}(x_i + \varsigma_i)^{\epsilon_i}$ .

According to the present inventive concept, the second binary string $\zeta$ is introduced to modify the monomial interactions through control bits. The second binary string $\zeta$ may be used to augment the role of control bits by introducing an additional degree of freedom for variable modification.

According to the present inventive concept, the monomial $x^\theta$ may be transformed into the modified form $\bar{x}_\zeta^\theta$ , defined as

$$\bar{x}_\zeta^\theta = \prod_{i=1}^{k}(x_i + \varsigma_i)^{\epsilon_i},$$

where $x_i \in Z_2$ may represent the variables, $\zeta_i \in Z_2$ may modify the interaction for each variable based on its binary value, and $\varepsilon_i$ may determine the control bit configuration.

According to the present inventive concept, the most general definition of an elementary gate of $k$ variables over $Z_2$ may be written as Eq. 2.

According to the present inventive concept, expanding the Eq. 1 to Eq. 2 is to generalize the transformation rule, where $\bar{x}_\zeta^\theta$ may incorporate the second binary string $\zeta$.

According to the present inventive concept, the generalization may support more complex polynomial transformations and enhance the framework's ability to represent and process non-linear relationships.

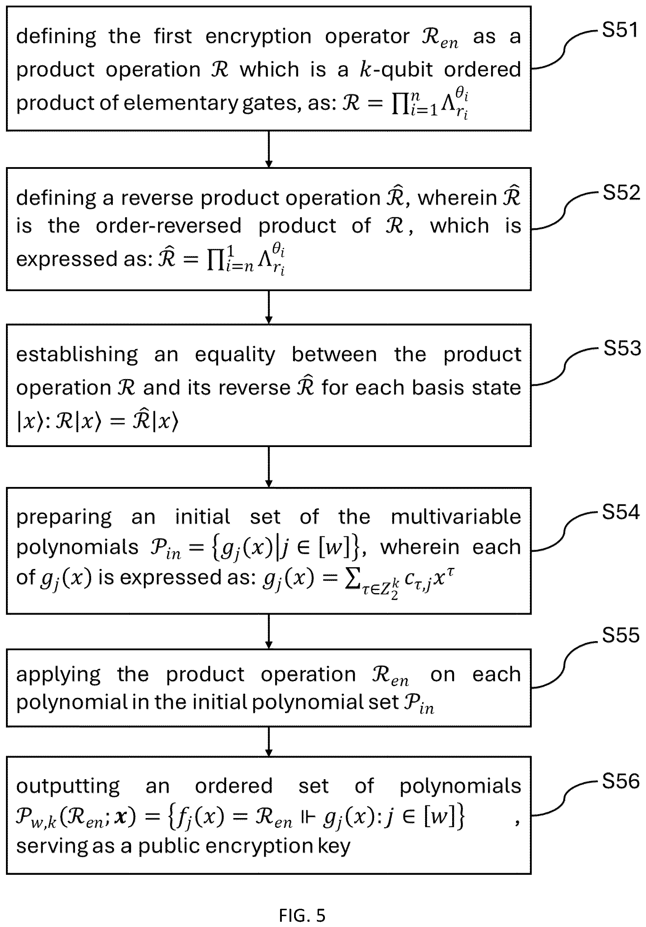

Please refer to FIG. 5 which is a schematic flow diagrams according to an embodiment of the method of the present inventive concept.

According to the present inventive concept, wherein the step S50 may further comprise:

S51. defining the first encryption operator $\mathcal{R}_{en}$ as a product operation $\mathcal{R}$ which is a $k$-qubit ordered product of elementary gates, as:

$$\mathcal{R} = \prod_{i=1}^{n} \Lambda_{r_i}^{\theta_i},$$

where $\Lambda_{r_i}^{\theta_i}$ denotes the $i$-th elementary gate acting on the $r_i$-th qubit with a control string $\theta_i \in \mathbb{Z}_2^k$.

According to the present inventive concept, $\theta_i \in \mathbb{Z}_2^k$ may represent he control string, specifying which qubits interact during the operation.

According to the present inventive concept, the ordered product $\mathcal{R}$ may encapsulate the sequential application of these gates to transform states into encrypted representations.

According to the present inventive concept, the use of elementary gates, e.g., negation, CNOT, Toffoli, may be used as the building blocks of encryption mappings.

According to the present inventive concept, wherein the step S50 may further comprise:

S52. defining a reverse product operation $\hat{\mathcal{R}}$, wherein $\hat{\mathcal{R}}$ is the order-reversed product of $\mathcal{R}$, which is expressed as:

$$\hat{\mathcal{R}} = \prod_{i=n}^{1} \Lambda_{r_i}^{\theta_i}.$$

In this embodiment, the reverse operation may ensure symmetry and facilitates invariance properties essential for encryption and decryption processes in the method of the present inventive concept.

According to the present inventive concept, wherein the step S50 may further comprise:

S53. establishing an equality between the product operation $\mathcal{R}$ and its reverse $\hat{\mathcal{R}}$ for each basis state $|x\rangle$:

$$|\mathcal{R} \Vdash x\rangle = \hat{\mathcal{R}}|x\rangle \ldots \text{Eq. 3,}$$

where $x \in \mathbb{Z}_2^k$.

According to the present inventive concept, an elementary gate of $k$ qubits $\Lambda_r^{\theta}$ sends a basis state of the same number of qubits $|a_1 a_2 \cdots a_r \cdots a_k\rangle$ to

$$\Lambda_r^{\theta}|a_1 a_2 \cdots a_r \cdots a_k\rangle = |a_1 a_2 \cdots (a_r + a^{\theta}) \cdots a_k\rangle \ldots \text{Eq. 2-1,}$$

here $r \in [k]$, $\theta = \varepsilon_1 \varepsilon_2 \cdots \varepsilon_k$ and $a^{\theta} = a_1^{\epsilon_1} a_2^{\epsilon_2} \cdots a_k^{\epsilon_k} \in Z_2^k$.

The equality of Eq. 3 is deemed as the evaluation duality between a state and its associated polynomials. Specifically, $|\mathcal{R} \Vdash x\rangle = |y_1(x)y_2(x) \cdots y_k(x)\rangle$ stands for a sequence of ordered polynomials written in a state. The s-th member, $y_s(x) = \mathcal{R} \Vdash x$, is the polynomial reaped by acting the product operation $\mathcal{R} = \Lambda_{r_u}^{\theta_u} \cdots \Lambda_{r_2}^{\theta_2} \Lambda_{r_1}^{\theta_1}$ embracing $u$ $\geq 1$ elementary gates on the s-th variable $x_s$ of $x = x_1 x_2 \cdots x_k \in Z_2^k$, $s \in [k]$. The state $\hat{\mathcal{R}}|x\rangle$ is the resultant of activating the order-reversed product $\widehat{\mathcal{R}} = \Lambda_{r_1}^{\theta_1}\Lambda_{r_2}^{\theta_2}\cdots\Lambda_{r_u}^{\theta_u}$ of $\mathcal{R}$ e R on $|x\rangle$. This equality elucidates the equivalence of the polynomial evaluation and the state computation, namely $|\mathcal{R} \Vdash x\rangle_{=a} = \widehat{\mathcal{R}}|a\rangle$ by substituting a multi-valued string $a$ for the input $x$ of polynomials $y_s(x)$ respectively. The validness of Eq. 3 will be confirmed through the process that repetitively employs Eq. 1 to generate polynomial monomials and Eq. 2-1 to calculate state components.

The transformations applied by $\mathcal{R}$ and its reverse $\widehat{\mathcal{R}}$ may yield equivalent outcomes, regardless of the order of gate application.

According to the present inventive concept, the sequential application of gates in $\mathcal{R}$ may introduce layers of complexity, leveraging the noncommutative properties of elementary gates for enhanced security.

The equality $\mathcal{R}|x\rangle = \widehat{\mathcal{R}}|x\rangle$ establishes an invariant property that strengthens the theoretical foundation of the encryption process.

Please further refer to FIG. 5. According to the present inventive concept, wherein the step S50 may further comprises:

S54. preparing an initial set of the multivariable polynomials $\mathcal{P}_{in} = \{g_j(x)|j \in [w]\}$, wherein $g_j(x)$ corresponds to each of $f(x)$, wherein each of $g_j(x)$ is expressed as:

$$g_j(x) = \sum_{\tau \in Z_2^k} c_{\tau,j} x^\tau,$$

where $c_{\tau,j} \in Z_2$ are binary coefficients and $x^\tau = x_1^{\sigma_1} x_2^{\sigma_2} \dots x_k^{\sigma_k}$ are monomials of degree $\leq k$.

According to the present inventive concept, the polynomial set may be structured and compatible with subsequent encryption transformations.

According to the present inventive concept, wherein the step S50 may further comprises:

S55. applying the product operation $\mathcal{R}_{en}$ on each polynomial in the initial polynomial set $\mathcal{P}_{in}$; and

S56. outputting an ordered set of polynomials $\mathcal{P}_{w,k}(\mathcal{R}_{en}; x) = \{f_j(x) = \mathcal{R}_{en} \Vdash g_j(x): j \in [w]\}$, serving as a public encryption key, where $w \geq k$ is the number of the polynomials.

In this embodiment, the first encryption operator $\mathcal{R}_{en}$ may be applied to each polynomial $g_j(x)$ in $\mathcal{P}_{in}$. The transformation is expressed as: $f_j(x) = \mathcal{R}_{en} \Vdash g_j(x), \forall j \in [w]$, where $f_j(x)$ represents the encrypted polynomial.

The polynomials may be transformed into secure forms while retaining their structural consistency.

The algorithm favors the first encryption operator $\mathcal{R}_{en}$ including a certain number of multi-controlled gates of higher ranks $\geq 2$ for the purpose of breeding polynomials of higher degrees in $\mathcal{P}_{w,k}(\mathcal{R}_{en}; x)$. Within the composition of $\mathcal{R}_{en}$, a pair of gates $\Lambda_r^\theta$ and $\Lambda_s^\tau$ are noncommuting if the $r$-th digit in $\tau$ or the $s$-th digit in $\theta$ is non-null, $r$ and $s \in [k]$.

In this embodiment, $w \geq k$ ensures sufficient encoding capacity for the plaintext. And the set $\mathcal{P}_{w,k}(\mathcal{R}_{en}; x)$ may serve as a reusable key for encoding plaintexts into ciphertexts.

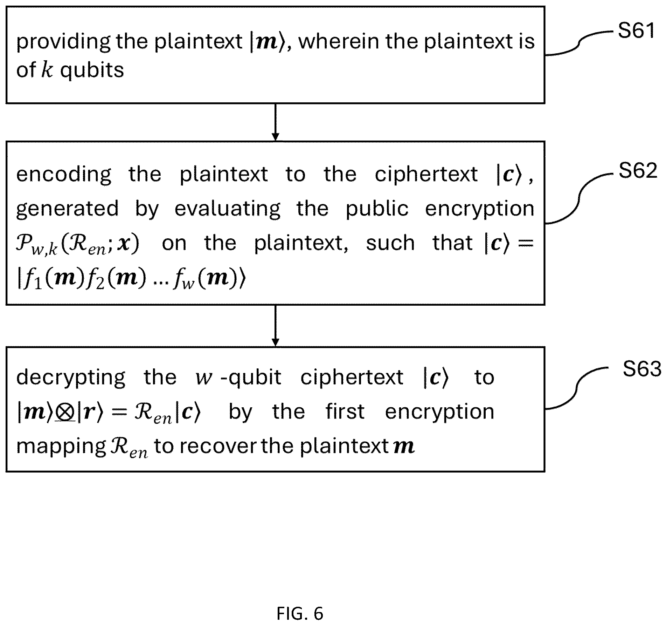

Please refer to FIG. 6 which is a schematic flow diagrams according to an embodiment of the method of the present inventive concept.

According to the present inventive concept, wherein the step S60 may further comprises:

S61. providing the plaintext $|m\rangle$, wherein the plaintext is of $k$ qubits; and

S62. encoding the plaintext to the ciphertext $|c\rangle$, wherein the ciphertext is of $w$ qubits, generated by evaluating the public encryption $\mathcal{P}_{w,k}(\mathcal{R}_{en}; x)$ on the plaintext, such that

$$|c\rangle = |f_1(m)f_2(m)\dots f_w(m)\rangle,$$

where $\boldsymbol{m} \in Z_2^k$, $c \in Z_2^w$ and $f_j(m) \in Z_2$ is the evaluation of the $j$-th polynomial $f_j(x) \in \mathcal{P}_{w,k}\,(\mathcal{R}_{en}\,;\boldsymbol{x})$ on the plaintext, $1 \leq j \leq w$.

In this embodiment, the plaintext $|\boldsymbol{m}\rangle$ may be served as the data to be encrypted using the EHE framework of the present inventive concept and the public encryption $\mathcal{P}_{w,k}\,(\mathcal{R}_{en}\,;\boldsymbol{x})$ may be serves as the functional basis for encoding the plaintexts into the ciphertexts. Specifically, the ciphertext $|\boldsymbol{c}\rangle$ is the evaluation of the public key $\mathcal{P}_{w,k}\,(\mathcal{R}_{en}\,;x)$, a multivariate polynomial set, on the input message $x = m$.

According to the present inventive concept, wherein the number of different polynomial sets, generated by all permutations of the elementary gates composing the operator $\mathcal{R}$, is a minimum of $h!$, where $h$ is a size of a maximal set of pairwise noncommuting gates in $\mathcal{R}$.

In an embodiment of the present inventive concept, the concept of a maximal set of pairwise noncommuting gates within R is introduced, wherein pairwise noncommuting gates satisfy $A \cdot B \neq B \cdot A$, ensuring that their order impacts the resulting transformations. Besides, the size of the maximal set is denoted as $h$, capturing the structural complexity of R.

As an implication, cracking the public key $\mathcal{P}_{w,k}\,(\mathcal{R}_{en}\,;x)$ generated by an encryption mapping R, whose maximal set of pairwise noncommuting gates is of size $h$, costs a combinatorial complexity comparable to $h!$.

The overall complexity is given by $h_l! \cdot h_{l-1}! \cdots h_1!$ for encryption mappings $\mathcal{R}_{en}$ composed of multiple disjoint subsets of mutually noncommuting gates ($h_r, r \in [l]$). By doing so, a cryptographic complexity criterion may be established based on the structural properties of the encryption operator $\mathcal{R}$. This result may directly quantify the security strength of the encryption mapping of the present inventive concept.

Please further refer to FIG. 6. According to the present inventive concept, wherein the step S60 may further comprises:

S63. decrypting the $w$-qubit ciphertext $|\boldsymbol{c}\rangle$ to $|\boldsymbol{m}\rangle \otimes |r\rangle = \mathcal{R}_{en}\,|\boldsymbol{c}\rangle$ by the first encryption mapping $\mathcal{R}_{en}$ to recover the plaintext $\boldsymbol{m}$.

Due to the duality, the ciphertext $|\boldsymbol{c}\rangle = |\mathcal{R}_{en}\,\Vdash x\rangle_{x=e}$, through evaluating $\mathcal{P}_{w,k}\,(\mathcal{R}_{en}\,;x)$ over a w-qubit state $|\boldsymbol{e}\rangle$ to $|\boldsymbol{m}\rangle \otimes |r\rangle$, equals $\widehat{\mathcal{R}}_{en}\,|\boldsymbol{e}\rangle$. Here, $|r\rangle$ is a basis state of $w - k$ qubits randomly assigned and $\widehat{\mathcal{R}}_{en}$ the order-reversed product of $\mathcal{R}_{en}$. Since every elementary gate is its own inverse, $\widehat{\mathcal{R}}_{en}^{-1} = \mathcal{R}_{en}$. The plaintext $|\boldsymbol{m}\rangle$ is thereby recovered from $\widehat{\mathcal{R}}_{en}^{-1}|\boldsymbol{c}\rangle = \mathcal{R}_{en}|\boldsymbol{c}\rangle = |\boldsymbol{e}\rangle$.

According to the present inventive concept, the duality relationship and the invertibility of elementary gates used in $\mathcal{R}_{en}$ lead to the exactness of decryption, so that the plaintext is able to be accurately recovered from the ciphertext without error, which may distinguish the method of the present inventive concept from the noisy decryption methods in traditional systems.

The complexities of attacking the invertible message encryption, IME, of $w$ qubits is proven to satisfy the complexity criteria $T_{de\text{-}NC} > T_{ICRP} > T_{XL} > 2^w$, where $T_{de\text{-}NC}$ is the decompositional noncommutativity complexity for this IME, $T_{ICRP}$ is the complexity of solving Invertible Circuit Reconstruction Problem (ICRP) for this IME, $T_{XL}$ is the complexity of attacking this IME via the XL algorithm, and $2^w$ is the complexity of attacking this IME via the brute-force method.

The complexity criteria of IME suggest that attacking the private key is more difficult than breaking the public key or the ciphertext.

Grounded on the complexity criteria, the security strength of IME may be straightforwardly increased with moderate efforts, whose minimum strength grows linearly with the length of input plaintext.

Based on the complexity criteria, the security of IME with a public key $\mathcal{P}_{w,k}\,(\mathcal{R}_{en}\,;\boldsymbol{x})$ surpasses the post-quantum standard $2^{128}$, and further attains the suggested threshold $2^{1024}$ of hyper quantum resilience.

The security requirements of IME fulfill the advanced privacy demands beyond the post-quantum standards.

The security requirements of IME prevent information from quantum attacks, including Grover's algorithm, quantum annealing and quantum Groebner-basis algorithm.

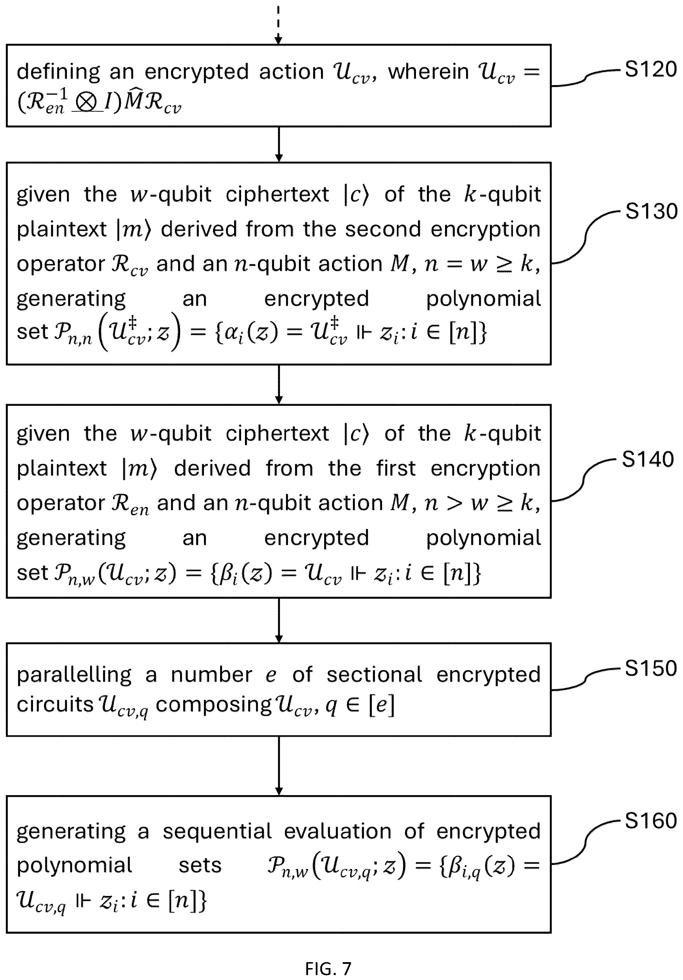

Please refer to FIG. 7 which is a schematic flow diagrams according to an embodiment of the method of the present inventive concept.

According to the present inventive concept, wherein the method may further comprises:

S120. defining an encrypted action $\mathcal{U}_{cv}$, wherein $\mathcal{U}_{cv} = (\mathcal{R}_{en}^{-1} \otimes I)\widehat{M}\mathcal{R}_{cv}$, with $\hat{M}$ is an order-reversed product of $M$, $n \geq$ w, and $I$ is an identity operator of $n$ - w qubits; and

S130. given the w-qubit ciphertext $|c\rangle$ of the k-qubit plaintext $|m\rangle$ derived from the second encryption operator $\mathcal{R}_{cv}$ and an $n$-qubit action $M$, $n = w \geq k$, generating an encrypted polynomial set

$$\mathcal{P}_{n,n}\big(\mathcal{U}_{cv}^{\ddagger}; z\big) = \{\alpha_i(z) = \mathcal{U}_{cv}^{\ddagger} \Vdash z_i : i \in [n]\} \dots \text{Eq. 3,}$$

wherein

$$\mathcal{U}_{cv}^{\ddagger}$$

is an encrypted action, and expressed as

$$\mathcal{U}_{cv}^{\ddagger} = \mathcal{R}_{cv}^{-1}\widehat{M}\mathcal{R}_{cv}, \text{'}$$

which is the adjoint of the encrypted action. Besides, $\alpha_i(z)$ is the $i$-th polynomial in the encrypted polynomial set

$$\mathcal{P}_{n,n}\big(\mathcal{U}_{cv}^{\ddagger}; z\big), z = z_1 z_2 \dots z_n \in Z_2^n$$

which is derived by applying

$$\mathcal{U}_{cv}^{\ddagger}$$

on the variables z.

The present inventive concept borrows the mechanism of QAPFTQC to encipher computations.

Assume that a $k$-qubit plaintext is encoded into a $w$-qubit ciphertext via a multivariate polynomial set generated by the first encryption operator $\mathcal{R}_{en}$, which is the encryption mapping, $k \leq w$. Accompanied by the second encryption operator $\mathcal{R}_{cv}$, an $n$-qubit operation $M$, a circuit of elementary gates, is concealed into the encrypted action $\mathcal{U}_{cv} = (\mathcal{R}_{en}^{-1} \otimes I)\widehat{M}\mathcal{R}_{cv}$ with $\hat{M}$ is an order-reversed product of $M$, $n \geq w$.

This encrypted action is a simplified form of the fault tolerant encode in QAPFTQC. Let the circuit of $\mathcal{U}_{cv}$ be rephrased as a set of $n$ multivariate polynomials. Grounded on the poetic duality, evaluating this polynomial set on the ciphertext yields the cryptovaluation. Finally, $\mathcal{R}_{cv}$ may serve as the private cryptovaluation key to decrypt the encrypted computation.

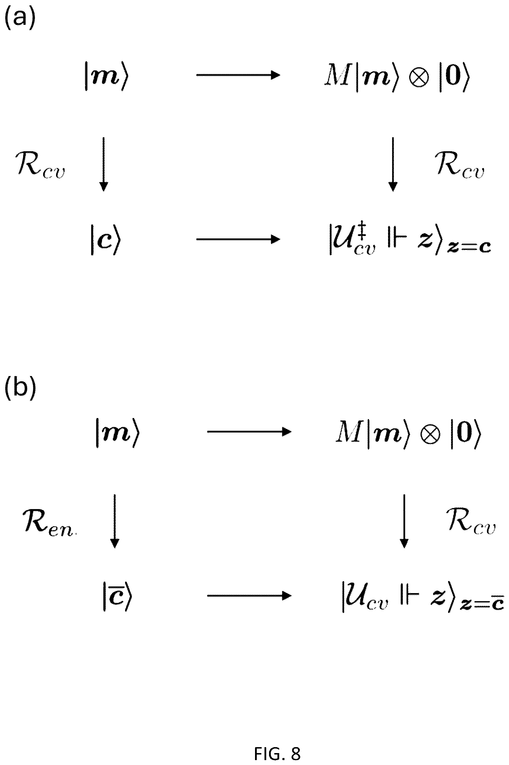

To begin with, consider w = n. In this scenario, the message and computation are mapped into an identical space of encryption as depicted in Fig. 8(a).

In this embodiment, the polynomial set $\mathcal{P}_{w,k}$ ($\mathcal{R}_{cv}$; $x$) generated by $\mathcal{R}_{cv}$, which is the public key for invertible message encryption, IME, encodes $|m\rangle$ into a ciphertext $|c\rangle$. On the strength of the duality relation, this ciphertext is alternatively written as $|c\rangle = \widehat{\mathcal{R}}_{cv}|m\rangle \otimes |0\rangle$ from exercising the order-reversed product $\widehat{\mathcal{R}}_{cv}$, of $\mathcal{R}_{cv}$ on the product state $|m\rangle \otimes |0\rangle$ of $|m\rangle$ and the $(n$ - $k)$-qubit null state $|0\rangle$. A step further is drawing $\mathcal{R}_{cv}$ that encodes M into the composition

$$\mathcal{U}_{cv}^{\ddagger} = \hat{\mathcal{R}}_{cv} M \mathcal{R}_{cv}^{-1}, 1$$

resulting in the encrypted computation

$$\hat{\mathcal{U}}_{cv}^{\ddagger} |\mathbf{c}\rangle = \hat{\mathcal{R}}_{cv} M |\mathbf{m}\rangle \otimes$$

$|\mathbf{0}\rangle$ called the cryptovaluation. Here,

$$, \hat{\mathcal{U}}_{cv}^{\ddagger}$$

is the order-reversed product of the encrypted action

$$\mathcal{U}_{cv}^{\ddagger}.$$

With the associated state

$$\mathcal{U}_{cv}^{\ddagger} \Vdash z\rangle = |\alpha_1(z)\alpha_2(z)\cdots\alpha_n(z)\rangle$$

and $i \in [n]$, it relishes the duality

$$\hat{\mathcal{U}}_{cv}^{\ddagger} |\mathbf{c}\rangle = \mathcal{U}_{cv}^{\ddagger} \Vdash z\rangle_{z=c}$$

between the state computation and the polynomial evaluation. Thus, the cryptovaluation is engaged in

$$\mathcal{U}_{cv}^{\ddagger} \Vdash z\rangle_{z=c}$$

of calculating the polynomial set

$$\mathcal{P}_{n,n}\big(\mathcal{U}_{cv}^{\ddagger}; z\big)$$

on the ciphertext $|\mathbf{c}\rangle$. The operator $\hat{\mathcal{R}}_{cv}^{-1} = \mathcal{R}_{cv}$ works as the private cryptovaluation key of the decryption, namely

$$\mathcal{R}_{cv}\big|\mathcal{U}_{cv}^{\ddagger} \Vdash z\rangle_{z=c} = \mathcal{R}_{cv}\hat{\mathcal{U}}_{cv}^{\ddagger} |\mathbf{c}\rangle = M |\mathbf{m}\rangle \otimes$$

$|\mathbf{0}\rangle$. Refer to Fig. 8(a) for the diagram outlining the process. In the scenario $n = w$, the message and computation are elegantly sent into an identical space of encryption under the same encryption operator $\mathcal{R}_{cv}$ .

According to the present inventive concept, $\mathcal{R}_{en}^{-1}$ is the inverse of the first encryption operator, which decodes the ciphertext into a form compatible with $\hat{M}$. The use of $\hat{M}$ make sure the invertibility of the computation and the consistency with the EHE framework's duality principles in the present inventive concept.

Besides, the encrypted action $\mathcal{U}_{cv}$ enables secure computation by maintaining the encrypted state throughout the process, preserving data confidentiality.

Please further refer to FIG. 7. According to the present inventive concept, wherein the method may further comprises:

S140. given the w-qubit ciphertext $|c\rangle$ of the k-qubit plaintext $|m\rangle$ derived from the first encryption operator $\mathcal{R}_{en}$ and an $n$-qubit action $M$, $n > w \geq k$, generating an encrypted polynomial set

$$\mathcal{P}_{n,w}(\mathcal{U}_{cv}; z) = \{\beta_i(z) = \mathcal{U}_{cv} \Vdash z_i : i \in [n]\} \quad \text{....Eq. 4,}$$

wherein $\beta_i(z)$ is the $i$ -th polynomial in the encrypted polynomial set $\mathcal{P}_{n,w}$ ( $\mathcal{U}_{cv}$ ; $z$), $z = z_1 z_2 \ldots z_n \in Z_2^n$ , encapsulating the transformation applied by $\mathcal{U}_{cv}$ .

Here, the encode $\hat{\mathcal{U}}_{cv} = \hat{\mathcal{R}}_{cv} M (\hat{\mathcal{R}}_{en}^{-1} \otimes I)$ is the order-reversed product of encrypted action $\mathcal{U}_{cv}$, with M sandwiched by the operator of input errors $\hat{\mathcal{R}}_{en}^{-1} \otimes I$ and the operator of output errors $\hat{\mathcal{R}}_{cv}$ .

The proof is similar as mentioned above, but replacing the encryption operator $\mathcal{R}_{cv}^{-1}$ of

$$\mathcal{U}_{cv}^{\ddagger}$$

by $\mathcal{R}_{en}^{-1} \otimes I$ , the encrypted polynomial set $\mathcal{P}_{n,n}\left(\mathcal{U}_{cv}^{\ddagger}; z\right)$ by $\mathcal{P}_{n,w}$ ( $\mathcal{U}_{cv}$ ; $z$), and the polynomial state

$$\left|\mathcal{U}_{cv}^{\ddagger} \Vdash z\right\rangle \text{ by } \left|\mathcal{U}_{cv} \Vdash z\right\rangle.$$

Similarly, ascertained from the duality relation, the output of the cryptovaluation is the polynomial evaluation $|\mathcal{U}_{cv} \Vdash z\rangle_{z=\overline{c}}$ on the product state $|\overline{c}\rangle = |c\rangle \otimes |0'\rangle$ of $|\overline{c}\rangle$ and a null basis state $|0'\rangle$ of $n$ - $w$ qubits. Likewise, the operator $\mathcal{R}_{cv}$ decrypts the evaluation. Please refer to FIG. 8(b) which pictures this process.

According to the present inventive concept, wherein the method further comprises:

S150. parallelling a number e of sectional encrypted circuits $\mathcal{U}_{cv,q}$ composing $\mathcal{U}_{cv}$ , $q \in [e]$; and
S 160. generating a sequential evaluation of encrypted polynomial sets

$$\mathcal{P}_{n,w}\left(\mathcal{U}_{cv,q}; z\right) = \{\beta_{i,q}(z) = \mathcal{U}_{cv,q} \Vdash z_i : i \in [n]\} \quad \text{....Eq. 5.}$$

In an embodiment of the present inventive concept, ciphertext $|c\rangle$, a w-qubit ciphertext derived from the first encryption mapping $\mathcal{R}_{en}$ , encodes the k-qubit plaintext $|m\rangle$, wherein $|c\rangle$ may serve as the input for the encrypted computational action. Then, $\mathcal{U}_{cv}$ may further transform the ciphertext $|\overline{c}\rangle$ within the encrypted domain. Next, the encrypted polynomial set $\mathcal{P}_{n,w}$ ( $\mathcal{U}_{cv}$ ; $z$) is generated, where each $\beta_i(z)$ may correspond to a transformed variable $z_i$ under the action of $\mathcal{U}_{cv}$ .

In another embodiment of the present inventive concept, the encrypted action $\mathcal{U}_{cv}$ may be partitioned into e sectional encrypted circuits $\mathcal{U}_{cv,q}$ , each of the sectional circuit may independently handle a subset of the computations, facilitating the parallelized execution. Each of the sectional circuit $\mathcal{U}_{cv}$ may be applied to the variables $z_i$ in the encrypted domain.

For every circuit $q$, an encrypted polynomial set $\mathcal{P}_{n,w}(\mathcal{U}_{cv,q}; z)$ is generated $\mathcal{P}_{n,w}(\mathcal{U}_{cv,q}; z) = \{\beta_{i,q}(z) = \mathcal{U}_{cv,q} \Vdash z_i: i \in [n]\}$, where each $\beta_{i,q}(z)$ may correspond to a transformed variable $z_i$ by the sectional circuit $\mathcal{U}_{cv,q}$.

After all sectional circuits $\mathcal{U}_{cv,q}$ have been applied, their outputs, the polynomial sets, may be sequentially combined. The sequential evaluation consolidates the partial results from each $\mathcal{P}_{n,w}(\mathcal{U}_{cv,q}; z)$ into the final encrypted polynomial set to complete the computation.

More specifically, depending on computing environments, the number e ranges from $n/2$ to $4n$ on the single-CPU and from n/8 to $n$ on the multiple cores. Due to this division, the circuit is factorized into a product $\mathcal{U}_{cv} = \mathcal{U}_e \mathcal{U}_{e-1} \cdots \mathcal{U}_2 \mathcal{U}_1$ of e component actions $\mathcal{U}_q$, $q \in [e]$. By arbitrarily taking a number e of sectional encryption operators $\mathcal{R}_q$ individually comprising elementary gates randomly generated, each member $\mathcal{U}_q$ is converted into a sectional encrypted circuit $\mathcal{U}_{cv,q} = \mathcal{R}_q \mathcal{U}_q \mathcal{R}_{q-1}^{-1}$ for $2 \leq q \leq e$ - 1, with $\mathcal{U}_{cv,1} = \mathcal{R}_1 \mathcal{U}_1$ and $\mathcal{U}_{cv,e} = \mathcal{U}_e \mathcal{R}_e^{-1}$. That is, the encrypted action is rewritten as

$$\mathcal{U}_{cv} = (\mathcal{U}_e \mathcal{R}_e^{-1})(\mathcal{R}_e \mathcal{U}_{e-1} \mathcal{R}_{e-1}^{-1}) \cdots (\mathcal{R}_2 \mathcal{U}_2 \mathcal{R}_1^{-1})(\mathcal{R}_1 \mathcal{U}_1).$$

Since encrypted polynomial sets $\mathcal{P}_{n,w}(\mathcal{U}_{cv,q}; z)$ are engendered independently from the encrypted circuits $\mathcal{U}_{sv,q}$ it enables a highly concurrent generation of polynomial sets. Founded on the duality, the sequential evaluation of polynomial states $|\mathcal{U}_{cv,q} \Vdash z\rangle$ educes the harvest of the cryptovaluation. With the initial input $|c\rangle$, a prior output is tapped as the subsequent input of steps from $q' = 1$ to $q' = $ eq, i.e., $|\bar{c}_1\rangle = |\mathcal{U}_{cv,1} \Vdash z\rangle_{z=\bar{c}}$ and $|\bar{c}_{q'+1}\rangle = |\mathcal{U}_{cv,q'+1} \Vdash z\rangle_{z=\bar{c}q'}$, for $q' < e$. The final evaluation $|\bar{c}_e\rangle$ is the consequent of this encrypted computation.

The complexity of attacking the computation encryption, cryptovaluation, of $n$ qubits on $w$-qubit ciphertexts is greater than $2^w$.

In a cryptovaluation, attacking the private key is more difficult than breaking the public key or the ciphertext.

In a cryptovaluation, the security strength may be straightforwardly increased with moderate efforts, whose minimum strength grows linearly with the length of input ciphertext.

In a cryptovaluation, the security surpasses the post-quantum standard $2^{128}$, and further attains the suggested threshold $2^{1024}$ of hyper quantum resilience.

The security requirements of cryptovaluation fulfill the advanced privacy demands beyond the post-quantum standards.

The security requirements of cryptovaluation prevent information from quantum attacks, including Grover's algorithm, quantum annealing and quantum Groebner-basis algorithm.

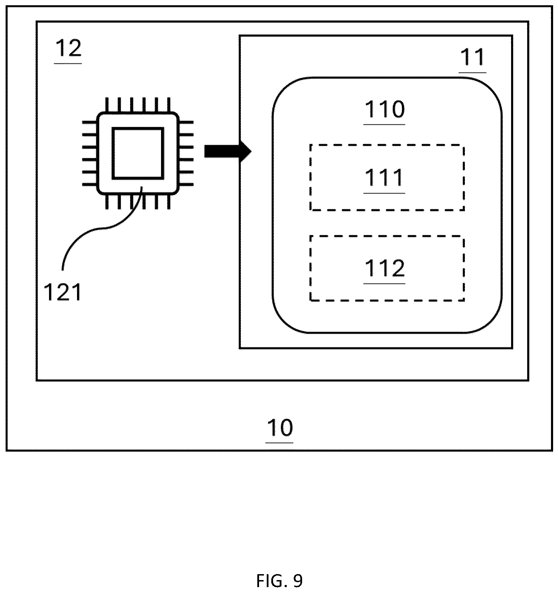

Please refer to FIG. 9. The present inventive concept further provides a system 10 for encryption and computation on a framework of exact homomorphic encryption, comprising:

a program 11 for executing the computer-implemented method based on a framework of exact homomorphic encryption according to the present inventive concept; and
a computing architecture 12, wherein the program 11 is deployed on the computing architecture 12.

According to the inventive concept, the computing architecture 12 may comprise a processing unit 121. The processing unit may be, but not limited to, for example, CPU, GPU, Tensor Processing Unit, Field Programmable Gate Array, Application-Specific Integrated Circuit, Quantum Processing Units, Neural Processing Unit, Trusted Platform Architecture, High-Bandwidth Memory, or the similar, or a combination thereof.

According to the present inventive concept, the program 11 for executing the computer-implemented method comprises a software 110 for exact homomorphic encryption, wherein the software 110 may comprise a first code 111 and a second code 112.

According to the present inventive concept, the first code 111 may be used for the message encryption.

According to the present inventive concept, the second code 112 may be used for executing the computer-implemented method based on a framework of exact homomorphic encryption.

In an embodiment of the present inventive concept, system for encryption and computation on a framework of exact homomorphic encryption may comprise a program comprising a EHE software for executing the method based on a framework of exact homomorphic encryption according to the present inventive concept; and a 64-bit computing architecture, wherein the program is deployed on the computing architecture.

In this embodiment, the EHE software may consist of two codes. The first code may be for IME and the second code may be for executing EHE inclusive of both encryptions of the message and computation.

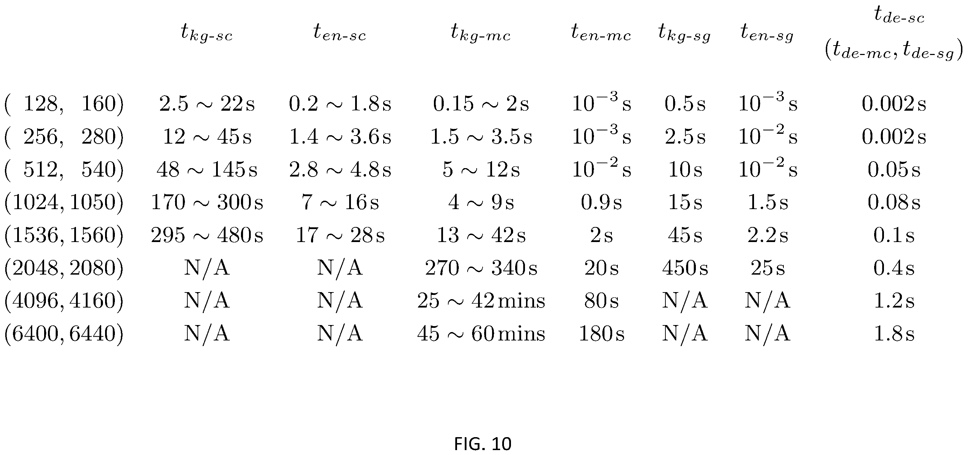

Please refer to FIG. 10 which shows the test data of the message encryption according to an embodiment of the present inventive concept.

In this embodiment, two parameters of the public key $\mathcal{P}_{w,k}$ ($\mathcal{R}_{en}$ ; x)P are put into the pair *(k, w)*. As shown in Table 1, $t_{kg\text{-}sc}$, $t_{kg\text{-}mc}$ and $t_{kg\text{-}sg}$ denote the key-generation times, $t_{en\text{-}sc}$, $t_{en\text{-}mc}$ and $t_{en\text{-}sg}$ denote the encoding times, and $t_{de\text{-}sc}$, $t_{de\text{-}mc}$ and $t_{de\text{-}sg}$ denotes the decoding times on the single-CPU, multi-CPUs and single-node GPU, respectively. The duration of reading and exchange of data is absorbed, which occupies around 4% in the key generation, 90% in the encoding and 2% in the decoding.

Due to their significantly higher degree of parallelism, larger memory capacity, and faster data transfer rates, the multi-CPU and single-node GPU platforms may achieve approximately a tenfold to twentyfold increase in efficiency for key generation and encoding compared to single-CPU systems. Nevertheless, regarding the decoding process involving elementary gates numbered linearly in w, operating on ciphertexts, it exhibits short and comparable execution times across all three platforms.

In this embodiment, a case involving the maximum parameter pair (6400,6440) is presented, which offers a robust encryption with a high level of security that remains challenging to achieve for existing post-quantum cryptosystems. Implemented within reasonable time increments of the key generation and the encoding, the sectional stratagem is equally well-adapted for the message encryption and is anticipated to further heighten the level of security.

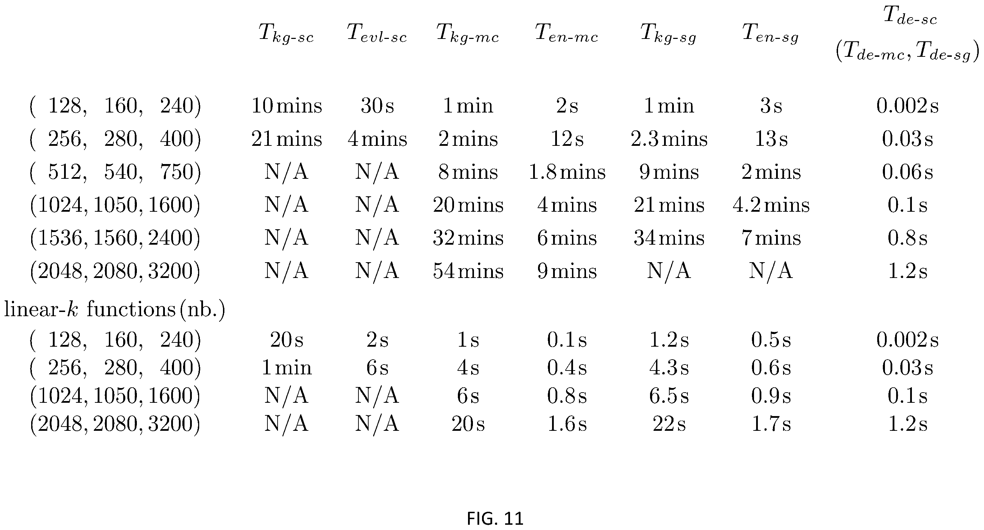

Please refer to FIG. 11 which shows the test data of the cryptovaluations according to another embodiment of the present inventive concept.

Regarding the sectional cryptovaluation governed by the second code, the triplet *(k, w, n)* encodes the three parameters of the encrypted polynomial sets $\mathcal{P}_{n,w}$ ($\mathcal{U}_{cv,q}$ ; z). To enable blind computation, it is essential that the encrypted functions remain indistinguishable during the computational process. To achieve this, the runtimes for generating the encrypted polynomials are carefully calibrated to be nearly identical.

In this embodiment, The number of sections is in the range $n/2 \leq e \leq 4n$ on the single-CPU and $n/8 \leq e \leq n$ on the multi-CPUs and single-node GPU.

$T_{kg\text{-}sc}$, $T_{kg\text{-}mc}$ and $T_{kg\text{-}sg}$ denote the longest task span of the polynomial generation among sections, $T_{evl\text{-}sc}$, $T_{evl\text{-}mc}$ and $T_{evl\text{-}sg}$ denote the evaluation times, and $T_{de\text{-}sc}$, $T_{de\text{-}mc}$ and $T_{de\text{-}sg}$ denote the decoding times on the single-CPU, multiple CPUs and single-node GPU, respectively.

The entire temporal course covers the time of data reading and communication, which conforms to the proportions the same as those of IME. As shown in FIG 10, the increased parallelism, memory capacity, and bandwidth of multi-CPU and single-node GPU platforms result in a performance boost of 10 to 20 times for generating encrypted polynomial sets and performing polynomial evaluations compared to the baseline single-CPU system. Existing homomorphic encryption (HE) systems struggle to achieve similar efficiency gains, as their parallelism is largely constrained by the inherently sequential nature of recursive noise reduction.

In this embodiment, the deciphering times are comparable across the three computing platforms. The parameter triplet reaches a maximum of (256, 280, 400) on the single-CPU, (1536, 1560, 2400) on multiple CPUs and (1024, 1050, 1600) on the single-node GPU, respectively.

The method and system based on a framework of exact homomorphic encryption of the present inventive concept demonstrate a clear advantage in handling encrypted computations of significantly larger sizes, far surpassing the limitations of existing HE systems.

According to the present inventive concept, if the blindness is lifted from cryptovaluations of linear-k functions, conducted in simpler encryptions with fewer sections, the key-generation and encoding times may reduce by a factor of ten or more, and the plaintext size undergoes a minimum 1.5-fold expansion.

Additional improvements in processing speed and memory efficiency can be achieved with precise single-bit operations , rather than 64-bit computing units.

It is clearly that the performance of the present inventive concept becomes increasingly great as the scale of the problem grows, significantly outperforming existing HE systems. This superiority stems from the ability of the present inventive concept to leverage intrinsic parallelism across multiple stages, including circuit segmentation, polynomial generation, polynomial evaluation, and monomial calculation. Additionally, at the foundational level of machine code, the use of invertible gates proves highly suitable for developing energy-efficient systems.

Experimental findings showcase that EHE possesses the capability of performing encrypted computations of large sizes and sophistication over diverse functions.

The present inventive concept provides a method and a system based on a framework of exact homomorphic encryption, EHE, which merges two concepts, quantum computation and cryptography. Quantum gates are introduced to EHE, substituting for non-invertible logic operations used in finite computations. Each quantum gate acts on not only on quantum states conventionally, but also on variables to generate polynomials. This approach enables the implementation of message and computation encryption through an encryption transformation constructed from a randomly chosen product of quantum gates.

Due to the succinct duality relation of the EHE framework, the ciphertext is generated by evaluating a polynomial set on the input plaintext, while the result of an encrypted computation is obtained by evaluating an encrypted polynomial set on the ciphertext. Disparate to prolix cryptograms of the two major existing post-quantum cryptosystems, the size of ciphertext provided by the present inventive concept is compact.

The success of the method and the system based on a framework of EHE of the present inventive concept lies in two fundamental properties of quantum gates: invertibility and noncommutativity. Unlike the noisy schemes of existing homomorphic encryption, the present inventive concept achieves exact encrypted computations through the use of invertible gates, ensuring precise decryption that surpasses the noisy deciphering methods of current encryption systems.

Furthermore, blindness in homomorphic computations is achieved through the indiscernibility of encoded functions, thus protecting both data and operations, a feat not achievable in current HE When facing quantum adversarial attacks, the present inventive concept exceeds the standard quantum resilience threshold of $2^{128}$ and surpass the suggested hyper-quantum resilience benchmark of $2^{1024}$. Since each activated gate preserves dimensionality, i.e., is dimension-one preserving, the present inventive concept is seamlessly implementable on classical computing environments without requiring quantum computers.

It is suggested to build EHE dedicated hardware holding the Massive Parallelism, Great Amount of Memory, Rapid Data Access-Transfer, Cores Affording Minimal Functionalities, and Accurate Single-Bit Computation through collaborative efforts with multinational corporations.

The EHE framework is deployable on a magnitude of applications, including, but no limited to, Military Defence, Governmental Affairs, Financial Services, Trustworthy AI, Medical Healthcare, Next-Generation Telecommunication, Low-Earth Orbit (LEO), Unmanned Aerial Vehicle (UAV), etc.; the strengths of EHE in each subject appreciably enhanced with dedicated hardware of portable devices forged via the miniaturization technology founded on Taiwan's leading semiconductor industry.

The foregoing descriptions of the detailed embodiments are only illustrated to disclose the features and functions of the present inventive concept and not restrictive of the scope of the present inventive concept. It should be understood to those in the art that all modifications and variations according to the spirit and principle in the disclosure of the present inventive concept should fall within the scope of the appended claims.

**Claims**

1. A computer-implemented method based on a framework of exact homomorphic encryption (EHE), wherein the method comprises:

   S10. providing a multivariate polynomial *of k* variables $f(x) = \sum_{\tau \in Z_2^k} c_\tau x^\tau$ wherein *f (x)* is a linear combination of monomials $x^\tau$ of degrees $\leq k$ with coefficients $c_\tau \in Z_2$, and each monomial $x^\tau$ is expressed as $x^\tau = x_1^{\sigma 1} x_2^{\sigma 2} \cdots x_k^{\sigma k}$, where $x_r \in Z_2, \tau = \sigma_1 \sigma_2 \cdots \sigma_r \cdots \sigma_k \in Z_2^k$ and $r \in [k]$, with [k] denoting a set of positive integers from 1 to *k;*

   S20. introducing elementary gates $\Lambda_r^\theta$ of *k* qubits, where the integer *r* signifies the *r*-th qubit as a target qubit of the elementary gate, and nonzero entities of Zc-bit binary string $\theta = \epsilon_1 \epsilon_2 \cdots \epsilon_k \in Z_2^k$ indicate positions of qubits serving as control bits;

   S30. applying elementary gates on quantum states;

   S40. applying elementary gates on the variables to generate multivariate polynomials over a binary field $Z_2$, formulated as the following transformation rule,

$$\Lambda_r^\theta \Vdash x_s = x_s + \delta_{rs} \boldsymbol{x}^\theta \; \dots \text{Eq. 1}$$

wherein $x_s \in Z_2$ is a binary variable and $\boldsymbol{x}^\theta = x_1^{\epsilon_1} x_2^{\epsilon_2} \cdots x_k^{\epsilon_k}$ a monomial of $k$ variables;

S50. defining a first encryption mapping $\mathcal{R}_{en}$ which is an ordered product of elementary gates randomly chosen; and

S60. applying the first encryption operator $\mathcal{R}_{en}$ to generate a set of $w$ multivariate polynomials that serves as a public encryption key for encoding a $k$-qubit plaintext into a w-qubit ciphertext, $w \geq k,$ for message encryption.

2. The method of claim 1, the elementary gates comprising the negation, the CNOT, the Toffoli, and the multi-controlled gates.

3. The method of claim 2, wherein the method further comprises:

S70. introducing a desired operation $M$ of $n$ qubits, $n > $ w, wherein $M$ is represented as a circuit composed of $n$-qubit elementary gates;

S80. defining a second encryption mapping $\mathcal{R}_{cv}$, wherein $\mathcal{R}_{cv}$ is an ordered product of $n$-qubit elementary gates randomly chosen;

S90. encoding the desired operation $M$ into an encrypted action, wherein the desired operation $M$ is cryptified into an encrypted action $U$ through the first encryption operator $\mathcal{R}_{en}$ and the second encryption operator $\mathcal{R}_{cv}$;

S100. generating an encrypted polynomial set from the encrypted action $U$; and

S110. evaluating the encrypted polynomial set on the ciphertext to yield an encrypted computation.

4. The method of claim 3, wherein the step S40 further comprises:

S41. giving a second binary string $\zeta$, wherein the second binary string $\zeta$ determines how variables interact within the monomial;

S42. modifying the monomial $x^\theta$ based on the second binary string $\zeta$ into a modified form $\bar{x}_\zeta^\theta$; and

S43. expanding the Eq. 1 to a formation

$$\Lambda_r^{\theta,\zeta} \Vdash x_s = x_s + \delta_{rs} \bar{x}_\zeta^\theta \; \dots \text{Eq. 2}$$

where s $\in$ *[k]* and $\bar{x}_\zeta^\theta$ is defined as $\bar{x}_\zeta^\theta = \prod_{i=1}^k (x_i + \varsigma_i)^{\epsilon_i}$.

5. The method of claim 4, wherein the step S50 further comprises:

S51. defining the first encryption operator $\mathcal{R}_{en}$ as a product operation $\mathcal{R}$ which is a $k$-qubit ordered product of elementary gates, as:

$$\mathcal{R} = \prod_{i=1}^n \Lambda_{r_i}^{\theta_i},$$

where $\Lambda_{r_i}^{\theta_i}$ denotes the $i$-th elementary gate acting on the $r_i$-th qubit with a control string $\theta_i \in \mathbb{Z}_2^k$;

S52. defining a reverse product operation $\hat{\mathcal{R}}$, wherein $\hat{\mathcal{R}}$ is the order-reversed product of $\mathcal{R}$, which is expressed as:

$$\hat{\mathcal{R}} = \prod_{i=n}^{1} \Lambda_{r_i}^{\theta_i};$$

and

S53. establishing an equality between the product operation $\mathcal{R}$ and its reverse $\hat{\mathcal{R}}$ for each basis state $|x\rangle$:

$$\mathcal{R}|x\rangle = \hat{\mathcal{R}}|x\rangle, \text{ where } x \in \mathbb{Z}_2^k \ldots \text{Eq. 3.}$$

6.  The method of claim 5, wherein the step S50 further comprises:

S54. preparing an initial set of the multivariable polynomials $\mathcal{P}_{in} = \{g_j(x)|j \in [w]\}$, wherein $g_j(x)$ corresponds to each of $f(x)$, wherein each of $g_j(x)$ is expressed as:

$$g_j(x) = \sum_{\tau \in Z_2^k} c_{\tau,j} x^\tau,$$

where $c_{\tau,j} \in Z_2$ are binary coefficients;

S55. applying the product operation $\mathcal{R}_{en}$ on each polynomial in the initial polynomial set $\mathcal{P}_{in}$ ; and

S56. outputting an ordered set of polynomials $\mathcal{P}_{w,k}$ ($\mathcal{R}_{en}$ ; $x$) = {$f_j(x) = \mathcal{R}_{en}$ ⊩ $g_j(x)$:$j$ E [$w$]}, serving as a public encryption key, where $w \geq k$ is the number of the polynomials.

7.  The method based on a framework of exact homomorphic encryption of claim 6, wherein the step S60 further comprises:

S61. providing the plaintext $|m\rangle$, wherein the plaintext is of k qubits; and
S62. encoding the plaintext to the ciphertext $|c\rangle$, wherein the ciphertext is of $w$ qubits, generated by evaluating the public encryption $\mathcal{P}_{w,k}$ ($\mathcal{R}_{en}$ ; $x$) on the plaintext, such that

$$|c\rangle = |f_1(m)f_2(m) \ldots f_w(m)\rangle \ldots \text{Eq. 4,}$$

where $m \in Z_2^k$, $c \in Z_2^w$ and $f_j(m) \in Z_2$ is the evaluation of the j-th polynomial $f_j(x) \in \mathcal{P}_{w,k}$ ($\mathcal{R}_{en}$ ; $x$) on the plaintext, $1 \leq j \leq w$.

8.  The method of claim 7, wherein the number of different polynomial sets, generated by all permutations of the elementary gates composing the operator $\mathcal{R}$ , is a minimum *of h!,* where *h* is a size of a maximal set of pairwise noncommuting gates in $\mathcal{R}$ .

9.  The method of claim 7 or 8, wherein the step S60 further comprises:

S63. decrypting the w-qubit ciphertext $|\overline{c}\rangle$ to $|m\rangle \otimes |r\rangle = \mathcal{R}_{en} |c\rangle$ by the first encryption mapping $\mathcal{R}_{en}$ to recover the plaintext *m*.

10. The method of claim 9, wherein the method further comprises:

S120. defining an encrypted action $\mathcal{U}_{cv}$, wherein $\mathcal{U}_{cv} = (\mathcal{R}_{en}^{-1} \otimes I)\hat{M}\mathcal{R}_{cv}$ , with $\hat{M}$ is an order-reversed product of $M$, $n \geq w$, and $I$ is an identity operator of $n$ - $w$ qubits; and
S130. given the w-qubit ciphertext $|c\rangle$ of the $k$-qubit plaintext $|m\rangle$ derived from the second encryption operator $\mathcal{R}_{cv}$ and an $n$-qubit action $M$, $n = w \geq k$, generating an encrypted polynomial set

$$\mathcal{P}_{n,n}\big(\mathcal{U}_{cv}^{\ddagger}; z\big) = \{\alpha_i(z) = \mathcal{U}_{cv}^{\ddagger} \Vdash z_i : i \in [n]\} \ldots \text{Eq. 5,}$$

wherein

$$\mathcal{U}_{cv}^{\ddagger}$$

is an encrypted action, and expressed as

$$\mathcal{U}_{cv}^{\ddagger} = \mathcal{R}_{cv}^{-1} \widehat{M} \mathcal{R}_{cv},$$

and $\alpha_i(z)$ is the $i$-th polynomial of

$$\mathcal{P}_{n,n}\big(\mathcal{U}_{cv}^{\ddagger}; z\big), z = z_1 z_2 \ldots z_n \in Z_2^n.$$

**11.** The method of claim 10, wherein the method further comprises:

S140. given the w-qubit ciphertext $|c\rangle$ of the k-qubit plaintext $|m\rangle$ derived from the first encryption operator $\mathcal{R}_{en}$ and an $n$-qubit action $M, n > w \geq k$, generating an encrypted polynomial set

$$\mathcal{P}_{n,w}\big(\mathcal{U}_{cv}; z\big) = \{\beta_i(z) = \mathcal{U}_{cv} \Vdash z_i : i \in [n]\} \ldots \text{Eq. 6,}$$

wherein $\beta_i(z)$ is the $i$-th polynomial of $\mathcal{P}_{n,w}(\mathcal{U}_{cv}; z)$, $z = z_1 z_2 \ldots z_n \in Z_2^n$.

**12.** The method of claim 11, wherein the method further comprises:

S150. parallelling a number e of sectional encrypted circuits $\mathcal{U}_{cv,q}$ composing $\mathcal{U}_{cv}$, $q \in [e]$; and
S 160. generating a sequential evaluation of encrypted polynomial sets

$$\mathcal{P}_{n,w}\big(\mathcal{U}_{cv,q}; z\big) = \{\beta_{i,q}(z) = \mathcal{U}_{cv,q} \Vdash z_i : i \in [n]\} \ldots \text{Eq. 7.}$$

**13.** A system for encryption and computation on a framework of exact homomorphic encryption, comprising:

a program for executing the computer-implemented method according to any one of claims 1 to 12; and
a computing architecture comprising a processing unit, wherein the program is deployed on the computing architecture.

**14.** The system of claim 13, wherein the program for executing the computer-implemented method comprises a software for exact homomorphic encryption, wherein the software comprises a first code and a second code.

**15.** The system of claim 14, wherein the first code is for the message encryption.

**16.** The system of claim 14, wherein the second code is for executing the computer-implemented method based on a framework of exact homomorphic encryption.

**17.** The system of claim 13, wherein the computing architecture comprises a CPU, GPU, or a combination thereof.

providing a multivariate polynomial of $k$ variables $f(x) = \sum_{\tau \in Z_2^k} c_\tau x^\tau$ wherein $f(x)$ is a linear combination of monomials $x^\tau$ of degrees $\leq k$ ⟶ S10

introducing elementary gates $\Lambda_r^\theta$ of $k$ qubits, where the integer $r$ signifies the $r$-th qubit as a target qubit of the elementary gate ⟶ S20

applying elementary gates on quantum states ⟶ S30

applying elementary gates on the variables to generate multivariate polynomials over a binary field $Z_2$, formulated $\Lambda_r^\theta \Vdash x_s = x_s + \delta_{rs} x^\theta$ ...Eq. 1 ⟶ S40

defining a first encryption mapping $\mathcal{R}_{en}$ which is an ordered product of elementary gates randomly chosen ⟶ S50

applying the first encryption operator $\mathcal{R}_{en}$ to generate a set of $w$ multivariate polynomials that serves as a public encryption key for message encryption ⟶ S60

FIG. 1

FIG. 2

introducing a desired operation $M$ of $n$ qubits, $n > w$, wherein $M$ is represented as a circuit composed of $n$-qubit elementary gates — S70

defining a second encryption mapping $\mathcal{R}_{cv}$, wherein $\mathcal{R}_{cv}$ is an ordered product of $n$-qubit elementary gates randomly chosen — S80

encoding the desired operation $M$ into an encrypted action, wherein the desired operation $M$ is cryptified into an encrypted action $U$ through the first encryption operator $\mathcal{R}_{en}$ and the second encryption operator $\mathcal{R}_{cv}$; — S90

generating an encrypted polynomial set from the encrypted action $U$ — S100

evaluating the encrypted polynomial set on the ciphertext to yield an encrypted computation. — S110

FIG. 3

giving a second binary string $\zeta$, wherein the second binary string $\zeta$ determines how variables interact within the monomial

S41

modifying the monomial $x^{\theta}$ based on the second binary string $\zeta$ into a modified form $\bar{x}^{\theta}_{\zeta}$

S42

expanding the Eq. 1 to a formation
$$\Lambda^{\theta,\zeta}_{r} \; \Vdash \; x_s = x_s + \delta_{rs}\bar{x}^{\theta}_{\zeta} \; ...$$

S43

FIG. 4

defining the first encryption operator $\mathcal{R}_{en}$ as a product operation $\mathcal{R}$ which is a $k$-qubit ordered product of elementary gates, as: $\mathcal{R} = \prod_{i=1}^{n} \Lambda_{r_i}^{\theta_i}$ — S51

defining a reverse product operation $\widehat{\mathcal{R}}$, wherein $\widehat{\mathcal{R}}$ is the order-reversed product of $\mathcal{R}$, which is expressed as: $\widehat{\mathcal{R}} = \prod_{i=n}^{1} \Lambda_{r_i}^{\theta_i}$ — S52

establishing an equality between the product operation $\mathcal{R}$ and its reverse $\widehat{\mathcal{R}}$ for each basis state $|x\rangle$: $\mathcal{R}|x\rangle = \widehat{\mathcal{R}}|x\rangle$ — S53

preparing an initial set of the multivariable polynomials $\mathcal{P}_{in} = \{g_j(x) | j \in [w]\}$, wherein each of $g_j(x)$ is expressed as: $g_j(x) = \sum_{\tau \in Z_2^k} c_{\tau,j} x^{\tau}$ — S54

applying the product operation $\mathcal{R}_{en}$ on each polynomial in the initial polynomial set $\mathcal{P}_{in}$ — S55

outputting an ordered set of polynomials $\mathcal{P}_{w,k}(\mathcal{R}_{en}; \boldsymbol{x}) = \{f_j(x) = \mathcal{R}_{en} \Vdash g_j(x) : j \in [w]\}$ , serving as a public encryption key — S56

FIG. 5

providing the plaintext $|m\rangle$, wherein the plaintext is of $k$ qubits — S61

encoding the plaintext to the ciphertext $|c\rangle$, generated by evaluating the public encryption $\mathcal{P}_{w,k}(\mathcal{R}_{en}; x)$ on the plaintext, such that $|c\rangle = |f_1(m)f_2(m) \dots f_w(m)\rangle$ — S62

decrypting the $w$-qubit ciphertext $|c\rangle$ to $|m\rangle \otimes |r\rangle = \mathcal{R}_{en}|c\rangle$ by the first encryption mapping $\mathcal{R}_{en}$ to recover the plaintext $m$ — S63

FIG. 6

defining an encrypted action $\mathcal{U}_{cv}$, wherein $\mathcal{U}_{cv} = (\mathcal{R}_{en}^{-1} \otimes I)\widehat{M}\mathcal{R}_{cv}$ ⟶ S120

given the $w$-qubit ciphertext $|c\rangle$ of the $k$-qubit plaintext $|m\rangle$ derived from the second encryption operator $\mathcal{R}_{cv}$ and an $n$-qubit action $M$, $n = w \geq k$, generating an encrypted polynomial set $\mathcal{P}_{n,n}\left(\mathcal{U}_{cv}^{\ddagger}; z\right) = \{\alpha_i(z) = \mathcal{U}_{cv}^{\ddagger} \Vdash z_i : i \in [n]\}$ ⟶ S130

given the $w$-qubit ciphertext $|c\rangle$ of the $k$-qubit plaintext $|m\rangle$ derived from the first encryption operator $\mathcal{R}_{en}$ and an $n$-qubit action $M$, $n > w \geq k$, generating an encrypted polynomial set $\mathcal{P}_{n,w}(\mathcal{U}_{cv}; z) = \{\beta_i(z) = \mathcal{U}_{cv} \Vdash z_i : i \in [n]\}$ ⟶ S140

parallelling a number $e$ of sectional encrypted circuits $\mathcal{U}_{cv,q}$ composing $\mathcal{U}_{cv}$, $q \in [e]$ ⟶ S150

generating a sequential evaluation of encrypted polynomial sets $\mathcal{P}_{n,w}\left(\mathcal{U}_{cv,q}; z\right) = \{\beta_{i,q}(z) = \mathcal{U}_{cv,q} \Vdash z_i : i \in [n]\}$ ⟶ S160

FIG. 7

(a)

$$|m\rangle \longrightarrow M|m\rangle \otimes |0\rangle$$

$$\mathcal{R}_{cv} \downarrow \qquad\qquad \downarrow \mathcal{R}_{cv}$$

$$|c\rangle \longrightarrow |\mathcal{U}_{cv}^{\ddagger} \Vdash z\rangle_{z=c}$$

(b)

$$|m\rangle \longrightarrow M|m\rangle \otimes |0\rangle$$

$$\mathcal{R}_{en} \downarrow \qquad\qquad \downarrow \mathcal{R}_{cv}$$

$$|\overline{c}\rangle \longrightarrow |\mathcal{U}_{cv} \Vdash z\rangle_{z=\overline{c}}$$

FIG. 8

FIG. 9

| | $t_{kg\text{-}sc}$ | $t_{en\text{-}sc}$ | $t_{kg\text{-}mc}$ | $t_{en\text{-}mc}$ | $t_{kg\text{-}sg}$ | $t_{en\text{-}sg}$ | $t_{de\text{-}sc}$ ($t_{de\text{-}mc}, t_{de\text{-}sg}$) |
|---|---|---|---|---|---|---|---|
| ( 128, 160) | $2.5 \sim 22\,\mathrm{s}$ | $0.2 \sim 1.8\,\mathrm{s}$ | $0.15 \sim 2\,\mathrm{s}$ | $10^{-3}\,\mathrm{s}$ | $0.5\,\mathrm{s}$ | $10^{-3}\,\mathrm{s}$ | $0.002\,\mathrm{s}$ |
| ( 256, 280) | $12 \sim 45\,\mathrm{s}$ | $1.4 \sim 3.6\,\mathrm{s}$ | $1.5 \sim 3.5\,\mathrm{s}$ | $10^{-3}\,\mathrm{s}$ | $2.5\,\mathrm{s}$ | $10^{-2}\,\mathrm{s}$ | $0.002\,\mathrm{s}$ |
| ( 512, 540) | $48 \sim 145\,\mathrm{s}$ | $2.8 \sim 4.8\,\mathrm{s}$ | $5 \sim 12\,\mathrm{s}$ | $10^{-2}\,\mathrm{s}$ | $10\,\mathrm{s}$ | $10^{-2}\,\mathrm{s}$ | $0.05\,\mathrm{s}$ |
| (1024, 1050) | $170 \sim 300\,\mathrm{s}$ | $7 \sim 16\,\mathrm{s}$ | $4 \sim 9\,\mathrm{s}$ | $0.9\,\mathrm{s}$ | $15\,\mathrm{s}$ | $1.5\,\mathrm{s}$ | $0.08\,\mathrm{s}$ |
| (1536, 1560) | $295 \sim 480\,\mathrm{s}$ | $17 \sim 28\,\mathrm{s}$ | $13 \sim 42\,\mathrm{s}$ | $2\,\mathrm{s}$ | $45\,\mathrm{s}$ | $2.2\,\mathrm{s}$ | $0.1\,\mathrm{s}$ |
| (2048, 2080) | N/A | N/A | $270 \sim 340\,\mathrm{s}$ | $20\,\mathrm{s}$ | $450\,\mathrm{s}$ | $25\,\mathrm{s}$ | $0.4\,\mathrm{s}$ |
| (4096, 4160) | N/A | N/A | $25 \sim 42\,\mathrm{mins}$ | $80\,\mathrm{s}$ | N/A | N/A | $1.2\,\mathrm{s}$ |
| (6400, 6440) | N/A | N/A | $45 \sim 60\,\mathrm{mins}$ | $180\,\mathrm{s}$ | N/A | N/A | $1.8\,\mathrm{s}$ |

FIG. 10

EP 4 589 877 A1

| | $T_{kg\text{-}sc}$ | $T_{evl\text{-}sc}$ | $T_{kg\text{-}mc}$ | $T_{en\text{-}mc}$ | $T_{kg\text{-}sg}$ | $T_{en\text{-}sg}$ | $T_{de\text{-}sc}$ $(T_{de\text{-}mc}, T_{de\text{-}sg})$ |
|---|---|---|---|---|---|---|---|
| ( 128, 160, 240) | 10 mins | 30 s | 1 min | 2 s | 1 min | 3 s | 0.002 s |
| ( 256, 280, 400) | 21 mins | 4 mins | 2 mins | 12 s | 2.3 mins | 13 s | 0.03 s |
| ( 512, 540, 750) | N/A | N/A | 8 mins | 1.8 mins | 9 mins | 2 mins | 0.06 s |
| (1024, 1050, 1600) | N/A | N/A | 20 mins | 4 mins | 21 mins | 4.2 mins | 0.1 s |
| (1536, 1560, 2400) | N/A | N/A | 32 mins | 6 mins | 34 mins | 7 mins | 0.8 s |
| (2048, 2080, 3200) | N/A | N/A | 54 mins | 9 mins | N/A | N/A | 1.2 s |
| linear-$k$ functions (nb.) | | | | | | | |
| ( 128, 160, 240) | 20 s | 2 s | 1 s | 0.1 s | 1.2 s | 0.5 s | 0.002 s |
| ( 256, 280, 400) | 1 min | 6 s | 4 s | 0.4 s | 4.3 s | 0.6 s | 0.03 s |
| (1024, 1050, 1600) | N/A | N/A | 6 s | 0.8 s | 6.5 s | 0.9 s | 0.1 s |
| (2048, 2080, 3200) | N/A | N/A | 20 s | 1.6 s | 22 s | 1.7 s | 1.2 s |

FIG. 11

EP 4 589 877 A1

Europäisches Patentamt
European Patent Office
Office européen des brevets

**EUROPEAN SEARCH REPORT**

Application Number

EP 25 15 1586

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/188342 A1 (SU ZHENG-YAO [TW] ET AL) 15 June 2023 (2023-06-15) * paragraph [0008] - paragraph [0034] * * paragraph [0043] - paragraph [0092]; figures 1,2 * | 1-17 | INV.<br>H04L9/00<br>H04L9/08<br>H04L9/30 |
| A | US 2023/131601 A1 (SU ZHENG-YAO [TW] ET AL) 27 April 2023 (2023-04-27) * paragraph [0005] - paragraph [0025] * * paragraph [0032] - paragraph [0049]; figures 1-3 * | 1-17 | |

**TECHNICAL FIELDS SEARCHED (IPC)**

H04L

The present search report has been drawn up for all claims

| Place of search | Date of completion of the search | Examiner |
|---|---|---|
| Munich | 12 May 2025 | Spranger, Stephanie |

**EP 4 589 877 A1**

## ANNEX TO THE EUROPEAN SEARCH REPORT
## ON EUROPEAN PATENT APPLICATION NO.

EP 25 15 1586

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2025

| Patent document cited in search report | Publication date | Patent family member(s) | Publication date |
|---|---|---|---|
| US 2023188342 A1 | 15-06-2023 | TW 202324223 A<br>US 2023188342 A1 | 16-06-2023<br>15-06-2023 |
| US 2023131601 A1 | 27-04-2023 | EP 4170964 A1<br>GB 2612142 A<br>JP 7257494 B1<br>JP 2023063201 A<br>US 2023131601 A1 | 26-04-2023<br>26-04-2023<br>13-04-2023<br>09-05-2023<br>27-04-2023 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63621188